# EUROPEAN PATENT SPECIFICATION

(11) **EP 1 192 186 B1**
(45) Date of publication and mention of the grant of the patent: **19.12.2007**
(21) Application number: 00906995.6
(22) Date of filing: 25.01.2000
(51) Int. Cl.: C08B 37/00, C08B 31/04, D21H 17/28, D21H 17/29, D21H 17/24, D21H 17/32

(54) **MODIFIED POLYSACCHARIDES CONTAINING AMPHIPHILIC MOIETIES**
MODIFIZIERTE POLYSACCHARIDE MIT AMPHIPHILEN EINHEITEN
POLYSACCHARIDES MODIFIES RENFERMANT DES FRACTIONS AMPHIPHILES

(30) Priority: 25.01.1999 US 117084 P; 20.01.2000 US 488429
(43) Date of publication of application: 03.04.2002
(73) Proprietor: KIMBERLY-CLARK WORLDWIDE, INC., Neenah, Wisconsin 54956 (US)
(72) Inventor: SCHROEDER, Wen, Zyo, Appleton, WI 54913 (US); CLARAHAN, Daniel, Arthur, Greenleaf, WI 54126 (US); GOULET, Mike, Thomas, Neenah, WI 54956 (US); SHANNON, Thomas, Gerard, Neenah, WI 54956 (US)
(74) Representative: Beacham, Annabel Rose
(86) International application number: PCT/US2000/001616
(87) International publication number: WO 2000/043423

(56) References cited:
- EP-A- 0 620 315
- EP-A- 0 761 691
- WO-A-99/12977
- DE-A- 2 247 943
- US-A- 2 661 349
- CARBOHYDRATE RESEARCH, vol. 18, 1971, pages 449-452,

## Description

### Background of the Invention

In the manufacture of paper products, such as facial tissue, bath tissue, paper towels, dinner napkins, a wide variety of product properties are imparted to the final product through the use of chemical additives. Examples of such additives include softeners, debonders, wet strength agents, dry strength agents, sizing agents, opacifiers. In many instances, more than one chemical additive is added to the product at some point in the manufacturing process. Unfortunately, there are instances where certain chemical additives may not be compatible with each other or may be detrimental to the efficiency of the papermaking process, such as can be the case with the effect of wet end chemicals on the downstream efficiency of creping adhesives. Another limitation, which is associated with wet end chemical addition, is the limited availability of adequate bonding sites on the papermaking fibers to which the chemicals can attach themselves. Under such circumstances, more than one chemical functionality compete for the limited available bonding sites, oftentimes resulting in the insufficient retention of one or both chemicals on the fibers.

Therefore, there is a need for a means of applying more than one chemical functionality to a paper web which mitigates the limitations created by limited number of bonding sites.

### Summary of the Invention

In certain instances, two or more chemical functionalities can be combined into a single molecule, such that the combined molecule imparts at least two distinct product properties to the final paper product that heretofore have been imparted through the use of two or more different molecules. More specifically, modified polysaccharides (such as starches, gums, chitosans, celluloses, alginates, sugars), which are commonly used in the paper industry as strengthening agents, surface sizes, coating binders, emulsifiers and adhesives, can be combined into a single molecule with amphiphilic hydrocarbons (e.g. surface active agents) which are commonly utilized in the paper industry to control absorbency, improve softness, enhance surface feel and function as dispersants. The resulting molecule is a modified polysaccharide having surface active moieties which can provide several potential benefits, depending on the specific combination employed, including: (a) strength aids that do not impart stiffness; (b) softeners that do not reduce strength; (c) wet strength with improved wet/dry strength ratio; (d) debonders with reduced linting and sloughing; (e) strength aids with controlled absorbency; and (g) surface sizing agents with improved tactile properties.

Hence in one aspect, the invention resides in a paper tissue sheet or a paper towel sheet, comprising a modified polysaccharide containing one or more amphiphilic hydrocarbon moieties, said modified polysaccharide having the following structure:

Polysac-Z₃R₁

Where
- Polysac=: a polysaccharide, monosaccharide, or sugar residue;
- Z₃=: a bridging radical CONH-or-NHCO-which serves to attach the R₁ group to the Polysac residue; and
- R₁ =: an organofunctional group containing a moiety consisting of an amphiphilic hydrocarbon having a carbon chain length of 4 or greater. The moiety may be normal or branched, saturated or unsaturated, substituted or unsubstituted, with or without esterification, with or without etherification, with our without sulfonation, with or without hydroxylation, with or without ethoxylation or propoxylation.

In another aspect, the invention resides in a method of making a paper tissue sheet or a paper towel sheet comprising the steps of: (a) forming an aqueous suspension of papermaking fibers; (b) depositing the aqueous suspension of papermaking fibers onto a forming fabric to form a web; and (c) dewatering and drying the web to form a paper sheet wherein a modified polysaccharide is added to the aqueous suspension, said modified polysaccharide having the following structure:

Polysac - Z₃R₁

where
- Polysac=: a polysaccharide, monosaccharide, or sugar residue;
- Z₃=: a bridging radical -CONH- or -NHCO- which serves to attach the R₁ group to the Polysac residue; and
- R₁ =: an organofunctional group containing a moiety consisting of an amphiphilic hydrocarbon having a carbon chain length of 4 or greater. The moiety may be normal or branched, saturated or unsaturated, substituted or unsubstituted, with or without esterification, with or without etherification, with our without sulfonation, with or without hydroxylation, with or without ethoxylation or propoxylation.

The amount of the modified polysaccharide added to the fibers can be from 0.02 to weight percent, on a dry fiber basis, more specifically from 0.05 to 1 weight percent, and still more specifically from 0.1 to 0.75 weight percent. The modified polysaccharide can be added to the fibers at any point in the papermaking process. A preferred addition point is where the fibers are suspended in water. However, modified polysaccharides can also be added topically to a dried paper web.

As used herein, polysaccharides are carbohydrates that can be hydrolyzed to many monosaccharides and include, but are not limited to, starches (primarily modified starches from potato, corn, waxy maize, tapioca and wheat) which can be unmodified, acid modified, enzyme modified, cationic, anionic or amphoteric; carboxymethylcellulose, modified or unmodified; natural gums, modified or unmodified (such as from locust bean and guar); sugars, modified or unmodified; chitosan, modified or unmodified; and dextrins, modified and unmodified.

"Monosaccharide" is a carbohydrate that cannot be hydrolyzed into simpler compounds.

"Carbohydrates" are polyhydroxy aldehydes, polyhydroxy ketones or compounds that can be hydrolyzed to them.

As used herein, amphiphilic hydrocarbon moieties are organic compounds including alkanes, alkenes, alkynes and cyclic aliphatics which contain surface active agents. The amphiphilic hydrocarbons can be linear or branched, saturated or unsaturated, substituted or unsubstituted.

Methods of making paper products which can benefit from the various aspects of this invention are well known to those skilled in the papermaking art. Exemplary patents include U.S. Patent No. 5,785,813 issued July 28,1998 to Smith et al. entitled "Method of Treating a Papermaking Furnish For Making Soft Tissue"; U.S. Patent No. 5,772,845 issued June 30, 1998 to Farrington, Jr. et al. entitled "Soft Tissue"; U.S. Patent No. 5,746,887 issued May 5, 1998 to Wendt et al. entitled "Method of Making Soft Tissue Products"; and U.S. Patent No. 5,591,306 issued January 7,1997 to Kaun entitled "Method For Making Soft Tissue Using Cationic Silicones".

### Detailed Description of the Invention

To further describe the invention, examples of the synthesis of some of the various chemical species are given below.

### Polysaccharides

### Starches

Unmodified starch has the structure shown in Figure 1. Unmodified starches can differ in properties such as amylopectin: amylose ratio, granule dimension, gelatinization temperature, and molecular weight. Unmodified starches have very little affinity for fibers, and modifications are widely done to extend the number of wet end starch additives available for use. Modifications to starches generally fall under one of the following categories: 1) Physical modifications, 2) Fractionation into amylose and amylopectin components, 3) Thermomechanical conversion, 4) Acid hydrolysis, 5) Chemical modifications, 6) Oxidation, 7) Derivatization and 8) Enzyme conversion.

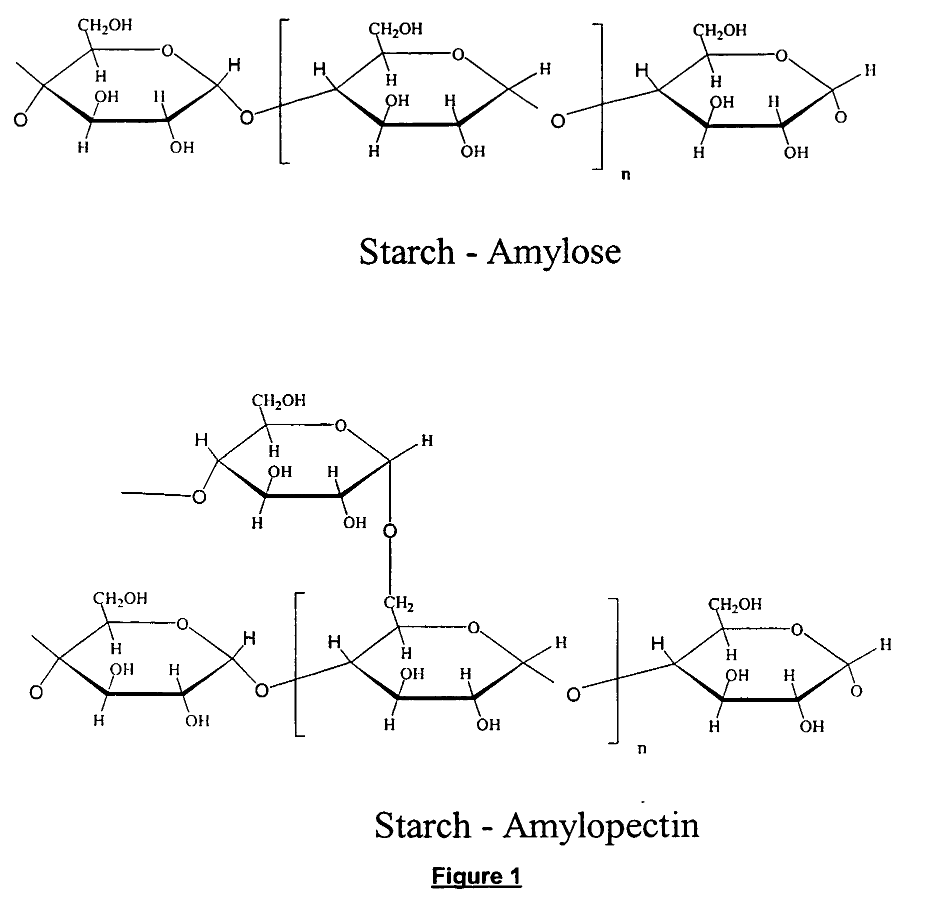

Starch derivatives are the most common type of dry strength additive used in the paper industry. The 1990 edition of the TAPPI publication "Commercially Available Chemical Agents for Paper and Paperboard Manufacture" lists 27 different starch dry strength products. Starch chemistry primarily centers on reactions with the hydroxyl groups and the glucosidic (C - O - C) linkages. Hydroxyl groups being subject to standard substitution reactions and the glucosidic linkages being subject to cleavage. In theory the primary alcohol at the C-6 position should be more reactive than the secondary alcohols at the C-2 and C-3 positions. Also, it has been found that the tuber starches are more reactive than the cereal starches.

A large variety of starch esters and ethers have been described. Few have been actively marketed due to non-specific properties resulting from the substitution groups. Esters will generally be prepared via reaction of the acid chloride or anhydride with the starch. Hydrophobic type structures can be introduced with this functionalization and such structures have found applications in the paper industry as adhesives, and grease resistant paper size coatings. (Starch Conversion Technology, 1985)

Cationic starches are recognized as the choice for wet end additives due to their substantivity with cellulose fibers. The cationization of starches is accomplished by reaction with various tertiary and quaternary amine reagents. In general, a reactive chloride or epoxy group on one end of the reagent reacts with a starch hydroxyl group. The cationic portion of the amine then ionizes in the presence of water to form the positively charged derivative which is substantive to fiber. Quaternary ammonium derivatives are most commonly used in the paper.

Other ionic charged starches are produced by reaction of starch with amino, imino, ammonium, sulfonium, or phosphonium groups, all of which carry an ionic charge. The key factor in their usefulness is their affinity for negatively charged substrates such as cellulose. These ionic starches have found widespread use in the paper industry as wet end additives, surface sizing agents and coating binders. Cationic starches improve sheet strength by promoting ionic bonding and additional hydrogen bonding within the cellulose fibers. Some common reagents used to prepare cationic starches include: 2-diethylaminoethyl chloride (DEC); 2-dimethylaminoethyl chloride; 2-diisopropylaminoethyl chloride; 2-diethylaminoethyl bromide; 2-dimethylaminoisopropyl chloride; N-alkyl-N-(2-haloethyl)-aminomethylphosphonic acids; and 2,3-epoxypropyltrimethylammonium chloride.

Epichlorohydrin reacts with tertiary amines or their salts in water or nonaqueous solvents to form the quaternary ammonium reagents. Trimethylamine, dimethylbenzyl amine, triethylamine, N-ethyl and N-methyl morpholine, dimethylcyclohexylamine, and dimethyldodecylamine (Paschall, E.F., U.S. patent 2,876,217, 1959 and U.S. patent 2,995,513, 1961) have been used.

Cyanamide and dialkyl cyanamides can be used to attach imino carbamate groups on starches. These groups show cationic activity upon treatment with acids. The acidified products are stable to hydrolysis. Cationic cyanamide starches show useful properties as textile sizes and dry strength additives in paper. (Chamberlain, R.J., US patent 3,438,970, 1969)

Aminoethylated starches are produced by treatment of ethyleneimine with starch in organic solvents or dry. Acidified products are useful as wet end paper additives (Hamerstrand, et al, "An evaluation of cationic aminoethyl cereal flours as wet end paper additives" Tappi, 58, 112, 1975). Starches react with isatoic anhydride and its derivatives to form anthranilate esters with primary or secondary amino groups (US patents, 3,449,886; 3,511,830; 3,513,156; 3,620,913). Products with primary amino anthranilate groups can be derivatized and used to improve wet rub resistance in paper coatings.

Cationic starches containing anionic xanthate groups provided both wet strength and dry strength to paper when used as wet end additives in unbleached kraft pulp systems. (Powers, et al, US Patent #3,649,624, 1972). In this system it is believed that the permanent wet strength results from covalent bonding from the xanthate side chain reactions. (Cheng, W.C., et al, Die Stärke, 30, 280, 1978)

Cationic dialdehyde starches are useful wet end additives for providing temporary wet strength to paper. They are produced by periodic acid oxidation of tertiary amino or quaternary ammonium starches, by treating dialdehyde starch with hydrazine or hydrazide compounds containing tertiary amino or quaternary ammonium groups, and several other reactions.

Graft copolymers of starch are widely known. Some graft copolymers made with starches include: vinyl alcohol; vinyl acetate; methyl methacrylate; acrylonitrile; styrene; acrylamide; acrylic acid; methacrylic acid; and cationic monomers with amino substituents including: 2-hydroxy-3-methacrylopropyltrimethylammonium chloride (HMAC); *N,N-*dimethylaminoethyl methacrylate, nitric acid salt (DMAEMA*HNO₃); *N-t*-butylaminoethyl methacrylate, nitric acid salt (TBAEMA*HNO₃); andN, N,N-trimethylaminoethyl methacrylate methyl sulfate (TMAEMA*MS).

Polyacrylonitrile (PAN) / starch graft copolymers are well known in the art. Treatment of the PAN / starch graft copolymers with NaOH or KOH converts the nitrile substituents to a mixture of carboxamide and alkali metal carboxylate. Such hydrolyzed starch-g-PAN polymers (HSPAN) are used as thickening agents and as water absorbents. Important applications for HSPAN include use in disposable soft goods designed to absorb bodily fluids. (Lindsay, W.F., Absorbent Starch Based Copolymers - Their Characteristics and Applications, Formed Fabrics Industry, 8(5), 20, 1977).

Copolymers with water-soluble grafts are also well known. Many of the water soluble graft copolymers are used for flocculation and flotation of suspended solids in the paper, mining, oil drilling and other industries. (Burr, R.C., et al, "Starch Graft Copolymers for Water Treatment", Die Stärke, 27, 155, 1975). Graft copolymers from the cationic amine containing monomers are effective retention aids in the manufacture of filled papers. Starch-g-poly(acrylamide-co-TMAEMA*MS) was found to improve drainage rates while increasing dry tensile strength of unfilled paper handsheets. (Heath, H.D., et al, "Flocculating agent-starch blends for interfiber bonding and filler retention, comparative performance with cationic starches", TAPPI, 57(11), 109, 1974.)

Thermoplastic-g-starch materials are also known, primarily with acrylate esters, methacrylate esters and styrene. Primary interest for these materials is in preparation of biodegradable plastics. No use of these materials as a paper additive has been found.

Other miscellaneous graft copolymers are known. Saponified starch-g-poly(vinyl acetate) has been patented as a sizing agent for cotton, rayon and polyester yarns. (Prokofeva, et al, Russian patent 451731, 1975). Graft copolymers have been saponified to convert starch-g-poly(vinyl acetate) copolymers into starch-g-poly(vinyl acetate) copolymers. As with the thermoplastic-g-starch copolymers most of these materials have been evaluated as polymeric materials in their own right and not as additives for paper.

Carboxymethyl cellulose, methylcellulose, alginate, and animal glues are superior film formers. These materials are typically applied via surface application and not added in the wet end of the process to improve dry strength. The products are relatively expensive and although they can be used alone they are typically employed in conjunction with starches or other materials.

### Gums:

Gums and mucilages use in papermaking dates back to ancient China. These mucilages were obtained from various plant roots and stems and were used primarily as deflocculating and suspending agents for the long fibered pulps. As papermaking evolved other advantages of using these materials became obvious including the ability of these materials to hold the wet fiber mat together during the drying process. As papermaking evolved to using shorter and shorter fibers these gums found increased use as a means of obtaining paper strength. Since World War II the use of gums in papermaking has increased substantially.

Water soluble, polysaccharide gums are highly hydrophilic polymers having chemical structures similar to cellulose. The main chain consists of β-1,4 linked mannose sugar units with occurrence of α-1,6 linked galactose side chains. Their similarity to cellulose means they are capable of extensive hydrogen bonding with fiber surfaces. Further enhancement of dry strength occurs due to the linear nature of the molecules.

They are vegetable gums and include as examples 1) locust bean gum, 2) guar gum, 3) tamarind gum, and 4) karaya, okra. Locust bean gum and guar gum are the most commonly used. They have been used in the paper industry since just prior to WWII. Since the natural materials are non-ionic they are not retained on fibers to any great extent. All successful commercial products have cationic groups attached to the main chain which increases the retention of the gums on the fiber surfaces. Typical addition rates for these materials are on the order of 0.1 - 0.35%.

The dry strength improvement of paper furnishes through use of polysaccharide gums is derived from the linear nature of the polymer and through hydrogen bonding of the hydroxyl hydrogen of the polymer with similar functional groups on the surface of the cellulosic fibers.

The most effective gums are quaternary ammonium chloride derivatives containing a cationic charge. The cationic functionality will help the gum retain better to the fibers as well as reducing the usually higher negative zeta potential of the paper furnish, especially when fillers and fines are present in the white water. This change in zeta potential leads to a more thorough agglomeration of the fines in the system by forming more cohesive flocs. These in turn are trapped by longer fibers filling the voids among the larger fibers with additional material that helps in the inter fiber bonding of the wet web, which in turn leads to dry strength improvement.

Although a variety of guar gum derivatives have been prepared, there are only three dervivatizations which have achieved commercial significance. These are 1) Quaternization, 2) Carboxymethylation and 3) Hydroxypropylation. Figure 3 shows the structure of guar gum and derivatives.

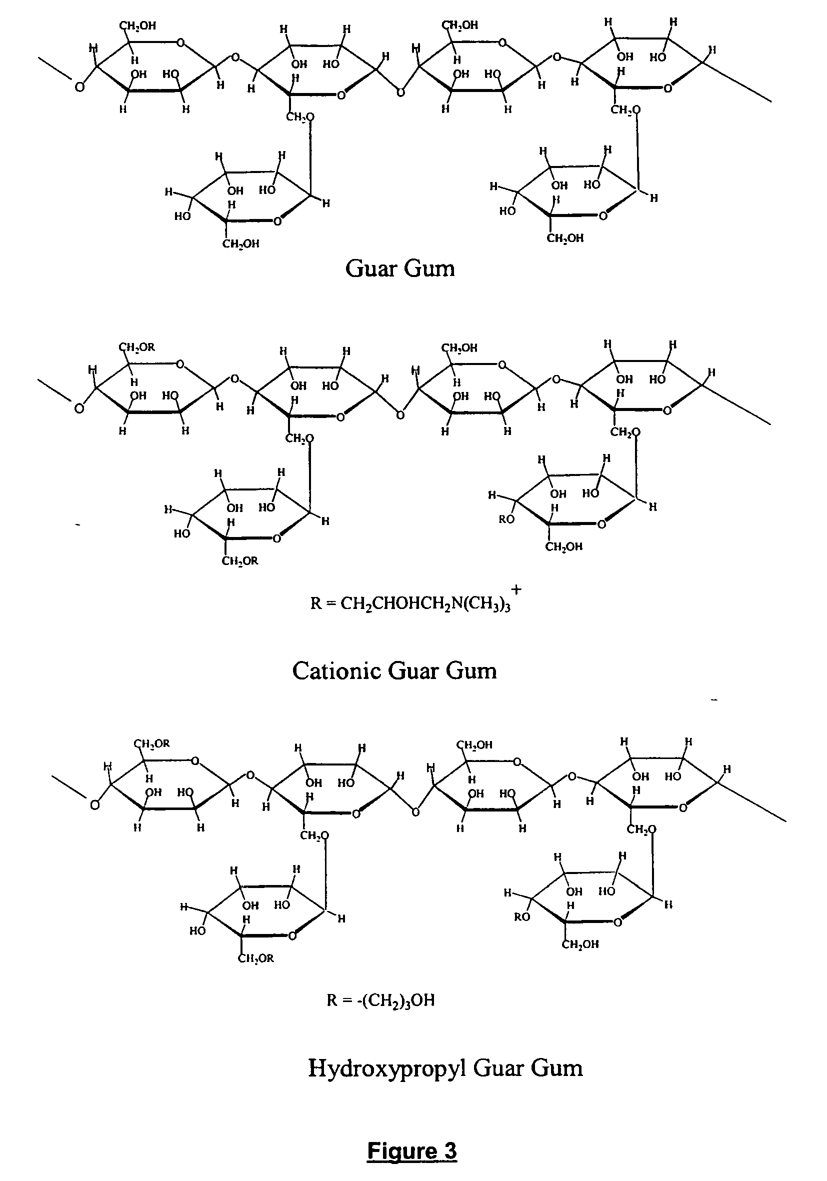

### Chitosan:

Chitosan is a high molecular weight linear carbohydrate composed of β-1,4-linked 2-amino-2-deoxy-D-glucose units. It is prepared from the hydrolysis of the N-acetyl derivative called chitin. Chitin is isolated in commercial quantities from the shells of crustaceans. Chitin is insoluble in most common solvents, however, chitosan is soluble in acidified water due to the presence of basic amino groups. Depending on the source and degree of deacetylation chitosans can vary in molecular weight and in free amine content. In sufficiently acidic environments the amino groups become protonated and chitosan behaves as a cationic polyelectrolyte. It has been reported that chitosans increase the dry strength of paper more effectively than other common papermaking additives including the polyethylenimines and polyacrylamides.

Chitosan and starch are both polymers of D-glucose but differ in two aspects. First, chitosan has an amino group on each glucose unit and therefore has a stronger cationic character than cationic starch. Secondly, starch differs in its molecular configuration. Starch contains amylopectin which has a three dimensional molecular structure and amylose, which has linear macromolecules. The glucose molecules of starch have an α-configuration which gives the molecules a helical form. Chitosan resembles cellulose and xylans in that it has β-linked D-monosaccharide units and tends to have straight molecular chains. The functionally reactive groups of a straight polymer molecule are more easily accessible than those of a branched, random configuration molecule and are expected to interact more effectively with the polar groups on cellulose. Figure 4 shows the structure of chitosan.

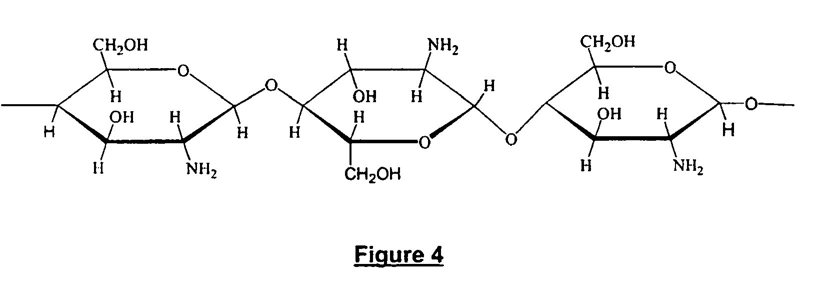

### Sugars

Also included in the saccharides are the simple sugars. These include the hexoses shown in Figure 5. These compounds actually exist in the cyclic acetal form as shown in Figure 6 for glucose. Derivatives of these sugars are included within this definition. Such derivatives include but are not limited to things such as gluconic acid, mucic acid, mannitol, sorbitol. The derivatives generally do not exist in cyclic form.

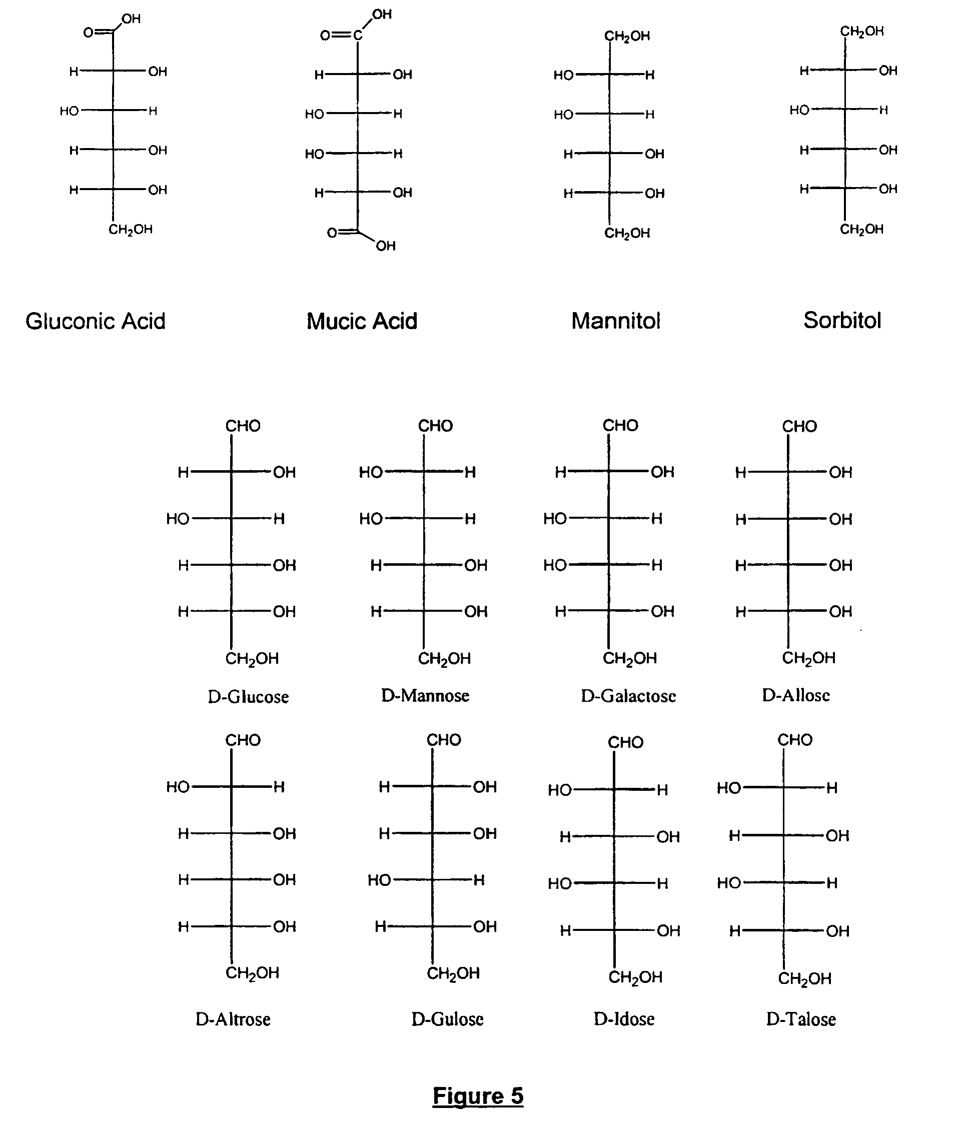

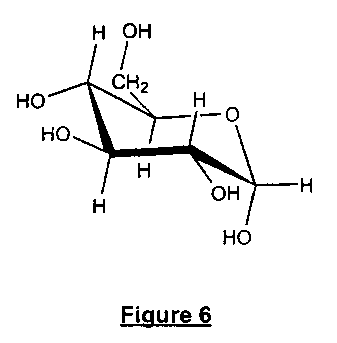

### Amphiphilic Hydrocarbon Moieties

Amphiphilic hydrocarbon moieties are a group of surface active agents (surfactants) capable of modifying the interface between phases. Surfactants are widely used by the industry for cleaning (detergency), solubilizing, dispersing, suspending, emulsifying, wetting and foam control. In the papermaking industry, they are often used for deinking, dispersing and foam control. They have an amphiphilic molecular structure: containing at least one hydrophilic (polar) region and at least one lipophilic (non-polar, hydrophobic) region within the same molecule. When placed in a given interface, the hydrophilic end leans toward the polar phase while the lipophilic end orients itself toward the non polar phase. 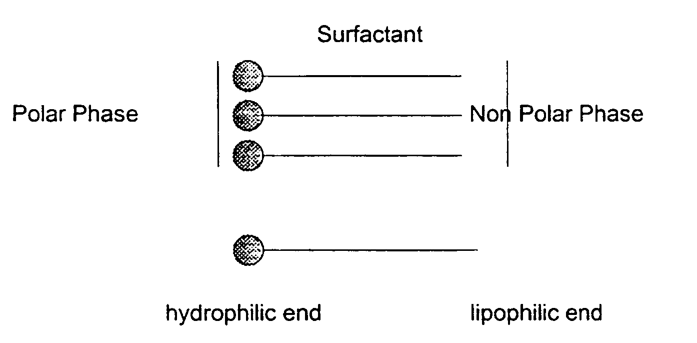 The hydrophilic end can be added to a hydrophobe synthetically to create the amphiphilic molecular structure. The following is a schematic pathway for making a variety of surfactants:

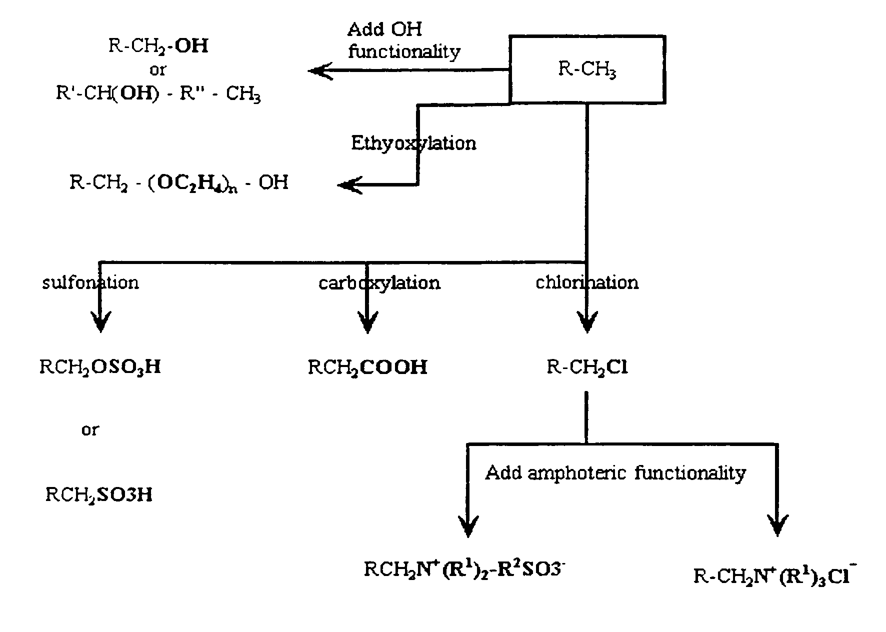

Based on the charge, surfactants can be grouped as amphoteric, anionic, cationic and nonionic.

First with regard to the amphoteric surfactants, the charges on the hydrophilic end change with the environmental pH: positive in acidic pH, negative at high pH and become zwitterions at the imtermediate pH. Surfactants included in this category include alkylamido alkyl amines and alkyl substituted amino acids.

Structure commonly shared by alkylamido alkyl amines: 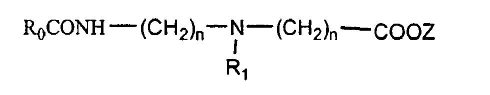 where
- R₀ =: a C₄ or higher alkyl or aliphatic hydrocarbon, normal or branched, saturated or unsaturated, substituted or unsubstituted.
- n ≥ 2:
- R₁ =: hydroxy or carboxy ended alkyl or hydroxyalkyl groups, C chain ≥ 2C, with or without ethoxylation, propoxylation or other substitution.
- Z =: H or other cationic counterion.

Structure shared commonly by alkyl substituted amino acids:

R₁- NR'₂Z

where
- R₁ =: alkyl or aliphatic hydrocarbon, normal or branched, saturated or unsaturated, substituted or unsubstituted, C chain ≥ 4C,
- n ≥ 2,:
- Z =: H or other cationic counterion
- R' =: carboxylic end of the amino acid.

With regard to the anionics, the hydrophilic end of the surfactant molecule is negatively charge. Anionics consist of five major chemical structures: acylated amino acids/acyl peptides, carboxylic acids and salts, sulfonic acid derivatives, sulfuric acid derivatives and phosphoric acid derivatives.

Structure commonly shared by acylated amino acids and acyl peptides:

R₀ OCO - R₁ - COOZ

or

HOOC - R₁ - COOZ

where
- R₀ =: alkyl or aliphatic hydrocarbon, normal or branched, saturated or unsaturated, substituted or unsubstituted, C chain ≥ 4C,
- R₁ =: alkyl substituted amino acid moiety; or -(NH-CHX-CO)ₙ-NH-CHX-
where n ≥ 1, X=amino acid sidechain; or alkyl -NHCOR' where R'= aliphatic hydrocarbon, normal or branched, saturated or unsaturated, substituted or unsubstituted, C chain ≥ 4C
- Z=: H or other cationic counterion

Structure commonly shared by carboxylic acid and salts:

R - COOZ

where:
- R =: alkyl or aliphatic hydrocarbon, normal or branched, saturated or unsaturated, substituted or unsubstituted, with or without esterification, with or without etherification, C chain ≥ 4C.
- Z =: H or other cationic counterion

Structure commonly shared by sulfonic acid derivatives:

RCO - NR₁ - (CH₂)ₙ - SO₃ Z

or

alkyl aryl -SO₃Z

or

R-SO₃Z

or

ROOC - (CH₂)ₙ - CH SO₃ - COOZ

or

[RCO - NH - (OCH₂)ₙ - OOC - CH SO₃ - COO] 2Z

or

R (OCH₂CH₂)ₙ - SO₃Z

where
- R =: alkyl or aliphatic hydrocarbon, normal or branched, saturated or unsaturated, substituted or unsubstituted, with or without esterification, with or without etherification, with or without sulfonation, with or without hydroxylation, C chain ≥ 4C;
- R₁ =: alkyl or hydroxy alkyl, C chain ≥1C;
- n ≥ 1;:
- Z =: H or other counterion.

Structure commonly shared by sulfuric acid derivatives:

R - O SO₃Z

where
- R =: aliphatic hydrocarbon, normal or branched, saturated or unsaturated, substituted or unsubstituted, with or without esterification, with or without etherification, with or without sulfonation, with or without hydroxylation, with or without ethoxylation or propoxylation, C chain ≥ 4C
- Z =: H or other counterion.

Structure commonly shared by phosphoric acid derivatives:

R-OPO₃Z

where
- R =: aliphatic hydrocarbon, normal or branched, saturated or unsaturated, substituted or unsubstituted, with or without esterification, with or without etherification, with or without sulfonation, with or without hydroxylation, with or without ethoxylation or propoxylation, C chain ≥ 4C
- Z =: H or other counterion.

With regard to the cationics, these are surfactants with a positively charged nitrogen atom on the hydrophobic end. The charge may be permanent and non pH dependent (such as quaternary ammonium compounds) or pH dependent (such as cationic amines). They include alkyl substituted ammonium salts, heterocyclic ammonium salts, alkyl substituted imidazolinium salts and alkyl amines.

Structure commonly shared by this group:

N⁺R₄Z⁻

where:
- R =: H, alkyl, hydroxyalkyl, ethoxylated and/or propoxylation alkyl, benzyl, or aliphatic hydrocarbon, normal or branched, saturated or unsaturated, substituted or unsubstituted, with or without esterification, with or without etherification, with or without sulfonation, with or without hydroxylation, with or without carboxylation, with or without ethoxylation or propoxylation, C chain ≥ 4C
- Z =: H or other counterion.

With regard to the nonionics, in this group the molecule has no charge. The hydrophilic end often contains a polyether (polyoxyethylene) or one or more hydroxyl groups. They generally include alcohols, alkylphenols, esters, ethers, amine oxides, alkylamines, alkylamides, polyalkylene oxide block copolymers.

### Modified polysaccharides Containing Amphiphilic Hydrocarbons

Two primary methods are envisioned for incorporating amphiphilic moieties into the polysaccharide based materials. In the first scheme the amphiphilic moieties are added via reaction between a functional group on the polysaccharide and a second functional group attached to the reagent containing the amphiphilic moiety. The polysaccharides may be derivatized or non-derivatized, cationic or non-cationic. The general reaction scheme is defined as follows:

Polysac - Z₁ + Z₂ - R₁ → Polysac - Z₃R₁

where:
- Z₁ =: functional group attached to the polysaccharide molecule and may be present either from the natural state or from a derivatization process. Examples of Z₁ functional groups include but are not limited to -NH₂ and -COOH.
- Z₂ =: Functional group attached to the R₁ moiety whose purpose is to react with a Z₁ functional group thereby attaching the R₁ moiety covalently to the polysaccharide.
- Z₃=: Bridging ligand formed as a result of reaction of Z₁ with Z₂.
- R₁ =: any organofunctional group with the only limitation being that R₁ must contain a moiety consisting of an amphiphilic hydrocarbon, normal or branched, saturated or unsaturated, substituted or unsubstituted, with or without esterification, with or without etherification, with our without sulfonation, with or without hydroxylation, with or without ethoxylation or propoxylation, C chain ≥ 4 carbons.

Such materials in general will have a macroscopic structure as shown in Figure 7 where the amphiphilic moieties are attached in a pendant fashion to the polysaccharide. Where decreased water solubility becomes an issue a second moiety, containing only a hydrophyllic portion may be attached to the polysaccharide. Examples of such materials would include ethylene glycol and its oligomers and polymers.

In theory the Z₂-R₁ reactant could be difunctional of the form Z₂-R₂-Z₂. however, in the case of high molecular weight polysaccharides this crosslinking could lead to water insoluble products, suitable for coatings but not useful for wet end applications. 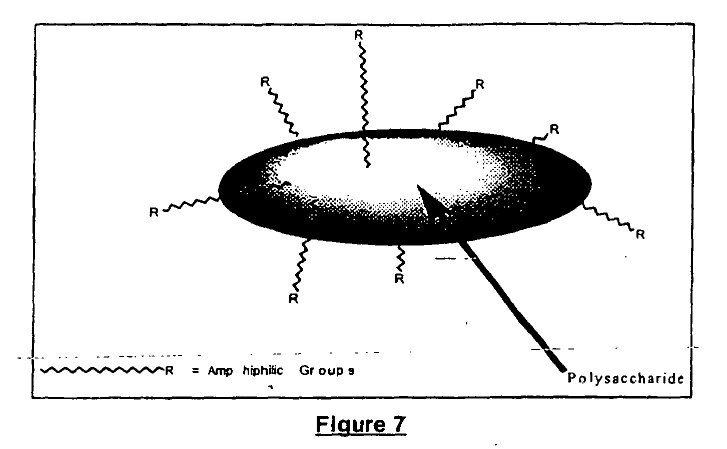 Synthesis of modified polysaccharides similar to those in Figure 7 could be prepared via a number of methods. Attachment of the amphiphilic hydrocarbon moiety could be achieved via the following paths:
(2) Dialdehyde polysaccharides, particularly dialdehyde starches, cationic or non-cationic, modified with fatty acid groups via reaction of the aldehyde groups with amines containing a linear or branched, saturated or unsaturated, substituted or non-substituted C₈ or higher aliphatic hydrocarbon moiety.
(3) Direct reaction of a functionalized linear or branched, saturated or unsaturated, substituted or non-substituted amphiphilic hydrocarbon moiety with the hydroxyl or amine groups on the polysaccharide. An example of such a reaction is shown in Figure 9 for chitosan:

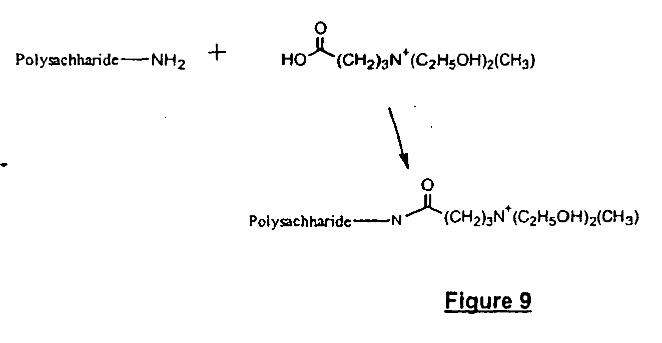

It will be appreciated that the foregoing examples, given for purposes of illustration, shall not be construed as limiting the scope of this invention, which is defined by the following claims.

## Claims

1. A paper tissue sheet or paper towel sheet comprising a modified polysaccharide containing one or more amphiphilic hydrocarbon moieties, said modified polysaccharide having the following structure:
Polysac -Z₃R₁
where
Polysac = a polysaccharide, monosaccharide or sugar residue;
Z₃ = a bridging radical -CONH- or -NHCO- which serves to attach the R₁ group to the Polysac residue; and
R₁ = an organofunctional group containing a moiety consisting of an amphiphilic hydrocarbon having a carbon chain length of 4 or greater.

2. A method of making a paper tissue sheet or paper towel sheet comprising the steps of: (a) forming an aqueous suspension of papermaking fibers; (b) depositing the aqueous suspension of papermaking fibers onto a forming fabric to form a web; and (c) dewatering and drying the web to form a paper tissue or towel sheet, wherein a modified polysaccharide is added to the aqueous suspension, said modified polysaccharide having the following structure:
Polysac - Z₃R₁
where
Polysac = a polysaccharide, monosaccharide or sugar residue;
Z₃ = a bridging radical -CONH- or -NHCO- which serves to attach the R₁ group to the Polysac residue; and
R₁ = an organofunctional group containing a moiety consisting of an amphiphilic hydrocarbon having a carbon chain length of 4 or greater.

## Patentansprüche

1. Tissuepapierbogen oder Papierhandtuchbogen, umfassend ein modifiziertes Polysaccharid, enthaltend eine oder mehrere amphiphile Kohlenwasserstoffeinheiten, wobei das modifizierte Polysaccharid die nachstehende Struktur aufweist:
Polysac - Z₃R₁
worin;
Polysac = ein Polysaccharid, Monosaccharid oder Zuckerrest;
z₃ = ein verbrückender Rest -CONH- oder -NHCO-, der dazu dient, die Gruppe R₁ an den Polysac-Rest zu binden; und
R₁ = eine organofunktionelle Gruppe, die eine Einheit enthält, die aus einem amphiphilen Kohlenwasserstoff mit einer Kohlenstoffkettenlänge von 4 oder größer besteht.

2. Verfahren zur Herstellung eines Tissuepapierbogens oder Papierhandtuchbogens, umfassend die Schritte von: (a) Bilden einer wässrigen Suspension von Papierherstellungsfasern; (b) Abscheiden der wässrigen Suspension von Papierherstellungsfasern auf ein Hlattbildungssieb unter Bildung einer Bahn; und (c) Entwässern und Trocknen der Bahn, um einen Tissuepapier- oder -handtuchbogen zu bilden, wobei ein modifiziertes Polysaccharid zu der wässrigen Suspension hinzugesetzt wird, wobei das modifizierte Polysaccharid die nachstehende Struktur aufweist:
Polysac - Z₃R₁
worin:
Polysac = ein Polysaccharid, Monosaccharid oder Zuckerrest;
Z₃ = ein verbrückender Rest -CONH- oder -NHCO-, der dazu dient, die Gruppe R₁ an den Polysac-Rest zu binden; und
R₁ = eine organofunktionelle Gruppe, die eine Einheit enthält, die aus einem amphiphilen Kohlenwasserstoff mit einer Kohlenstoffkettenlänge von 4 oder größer besteht.

## Revendications

1. Feuille de papier mousseline ou feuille d'essuie-mains en papier comprenant un polysaccharide modifié contenant un ou plusieurs groupes fonctionnels hydrocarbonés amphiphiles, ledit polysaccharide modifié ayant la structure suivante
Polysac-Z₃R₁
où :
Polysac = un polysaccharide, monosaccharide ou résidu de sucre ;
Z₃ = un radical de pontage -CONH- ou -NHCO- qui sert à fixer le groupe R₁ sur le résidu Polysac ; et
R₁ = un groupe organofonctionnel contenant un groupe fonctionnel consistant en un hydrocarbure amphiphile ayant une longueur de chaîne carbonée de 4 ou plus.

2. Procédé de fabrication d'une feuille de papier mousseline ou feuille d'essuie-mains en papier comprenant les étapes de : (a) formation d'une suspension aqueuse de fibres papetières ; (b) dépôt de la suspension aqueuse de fibres papetière sur une toile de formation pour former un voile ; (c) déshydratation et séchage du voile pour former une feuille de papier mousseline ou feuille d'essuie-mains en papier, procédé dans lequel un polysaccharide modifié est ajouté à la suspension aqueuse, ledit polysaccharide modifié ayant la structure suivante
Polysac-Z₃R₁
où :
Polysac = un polysaccharide, monosaccharide ou résidu de sucre ;
Z₃ = un radical de pontage -CONH- ou -NHCO- qui sert à fixer le groupe R₁ sur le résidu Polysac ; et
R₁ = un groupe organofonctionnel contenant un groupe fonctionnel consistant en un hydrocarbure amphiphile ayant une longueur de chaîne carbonée de 4 ou plus.
